# EUROPEAN PATENT APPLICATION

(11) **EP 3 680 541 A1**
(43) Date of publication of application: **15.07.2020**
(21) Application number: 18853328.5
(22) Date of filing: 04.09.2018
(51) Int. Cl.: F16S 5/00, F16B 5/06

(54) **ASSEMBLED STRUCTURE**

(30) Priority: 05.09.2017 CN 201710792788; 05.09.2017 CN 201721139932 U
(71) Applicant: Deng, Xuesong, Urumqi, Xinjiang 830000 (CN)
(72) Inventor: Deng, Xuesong, Urumqi, Xinjiang 830000 (CN)
(74) Representative: Alatis
(86) International application number: PCT/CN2018/103890
(87) International publication number: WO 2019/047814

(57) **Abstract**

Provided is an assembled structure that comprises multiple first assembling units (11), each of the first assembling units (11) comprising main body parts (12) and connection parts (13), wherein the main body parts (12) have a profile shape of a polygon having 6n equal-length sides, wherein n is a positive integer; and the connection parts (13) are provided on each equal-length side of each main body part (12); and the connection parts (13) on each equal-length side are connected to each neighboring first assembling unit (11) by means of a sliding pair, and the sliding direction of the sliding pair is the same as the extension direction of the sliding pair on the equal-length side on which the sliding pair resides.

## Description

### CROSS-REFERENCE TO RELATED APPLICATIONS

The present application claims the priorities to Chinese patent application No. 201710792788.8 titled "ASSEMBLY STRUCTURE", filed with the Chinese State Intellectual Property Office on September 5, 2017 and Chinese patent application No. 201721139932.X titled "ASSEMBLY STRUCTURE", filed with the Chinese State Intellectual Property Office on September 5, 2017, the entire disclosures of which are incorporated herein by reference.

### FIELD

The present application relates to the technical field of connecting components, and more particularly to an assembly structure.

### BACKGROUND

Conventional assembly structures mainly are connected by bolt sets, rivets or welding. Such connection manners are inconvenient in construction and have many components, therefore the quality and the stability of the connection cannot easily be guaranteed, and labor hours and costs are high. Especially for relatively large systematic engineering, conventional connection manners causes long construction time, a high cost, low efficiency and a tremendous cost of future maintenance.

Moreover, it is not easy to guarantee the integrality by conventional connection manners, since small mistakes may affect the whole assembly structure, and small mistakes are not easily to be checked out.

Therefore, a technical solution to be addressed by those skilled in the art is to improve conventional assembly structures, so as to enhance connection stability, reduce installation components, and lower the cost.

### SUMMARY

The present application is to provide an assembly structure, whose assembly units are assembled and disassembled by a pin mounting structure, and the assembly units cannot be disassembled under natural conditions after the assembly, thus the assembly structure has high reliability. In addition, after the assembly is completed, a connection failure at a position will not affect the strength of the whole structure. Moreover, such an assembly structure has a simple assembly process, does not need additional connecting pieces, and has a low cost.

The assembly structure according to the present application includes multiple first assembly units. Each of the first assembly units includes a main body portion and a connecting portion, an outline shape of the main body portion is a polygon with 6n equal sides, wherein "n" is a positive integer; the connecting portion is arranged on each equal side of each main body portion and is connected to the main body portion to form an integral structure; the connecting portion on each equal side is connected to each of the adjacent first assembly units through a sliding pair. The sliding pair between any two of the first assembly units includes a first slide slot arranged on the connecting portion of one first assembly unit, a sliding fit structure arranged on the connecting portion of another first assembly unit which can be connected to the first slide slot and slide along the first sliding slot, and a sliding direction of the sliding pair the same as an extension direction of the equal side where the sliding pair is located.

Preferably, one connecting portion in any two adjacent connecting portions of the same first assembly unit is provided with the first sliding slot, and the other connecting portion is provided with the sliding fit structure.

Preferably, the sliding fit structure is a second sliding slot, a slot opening of the first slide slot and a slot opening of the second slide slot are opposite, and the first slide slot and the second slide slot can engage with each other.

Preferably, a thickness of a side wall entering into the second slide slot of the first slide slot is equal to or smaller than a width of the second sliding slot, and a thickness of a side wall entering into the first slide slot of the second slide slot is equal to or smaller than a width of the first sliding slot.

Preferably, one end and/or both ends of the first slide slot and the second slide slot in the sliding direction are provided with a sliding entrance structure.

Preferably, the sliding fit structure is an L-shaped sliding buckle which can enter into the first sliding slot, and a side wall of the L-shaped sliding buckle enters into the first sliding slot.

Preferably, a width of the slot opening of the first slide slot is smaller than a width between the side walls of the first sliding slot, and the sliding fit structure is a T-shaped sliding buckle which can enter into the first sliding slot.

Preferably, an included angle between the connecting portion and the main body portion of the first assembly unit is 90 degrees or not.

Preferably, the assembly structure further includes a second assembly unit. The second assembly unit includes a main body portion and a connecting portion, an outline shape of the main body portion of the second assembly unit is a polygon, the connecting portion of the second assembly unit is arranged on a side of the second assembly unit and is connected to the main body portion to form an integral structure; the connecting portion of the second assembly unit can be connected to the connecting portion of the first assembly unit, and the connecting portions of two second assembly units can be connected to each other.

Preferably, the connecting portion of the second assembly unit is a sliding fit structure which can fit with the first slide slot of the first assembly unit, or a slide slot fitting with the sliding fit structure of the first assembly unit.

Preferably, an included angle between the connecting portion and the main body portion of the second assembly unit is 90 degrees or not.

Preferably, the connecting portion on the equal side may be also connected to each of the adjacent first assembly units through a pin assembly structure, the pin assembly structure between any two of the first assembly units includes a first pin hole which is arranged on the connecting portion of one first assembly unit, a second pin hole which is arranged on the connecting portion of another first assembly unit and can align with the first pin hole, and a pin shaft which can be inserted in the first pin hole and the second pin hole. An extension direction of the first pin hole and an extension direction of the second pin hole is the same as an extension direction of the equal side where the pin holes are located.

Preferably, a groove is arranged between the connecting portion and the main body portion, so that an elastic deformation of the connecting portion can be generated. The assembly structure further includes a supporting rib which is detachably connected to the assembly unit, and when the supporting rib is supporting the assembly unit, the elastic deformation of the connecting portion can be avoided.

Preferably, each of the assembly units is provided with a buckle for mounting the supporting ribs.

Preferably, the connecting portion on a side the second assembly unit may be also connected to each of the adjacent first assembly units or second assembly unit through a pin mounting structure. Each pin mounting structure includes a first pin hole which is arranged on one connecting portion, a second pin hole which is arranged on another connecting portion and can align with the first pin hole, and a pin shaft which can be inserted in the first pin hole and the second pin hole. An extension direction of the first pin hole and an extension direction of the second pin hole is the same as an extension direction of the equal side where the pin holes are located.

According to the technical solution provided in the present application, the main body portion of the first assembly unit is a polygon with 6n equal sides (n equals to a natural number such as 1,2,3,4,5,6 and the like), for example, in the case that n=1, the main body portion of the first assembly unit is a polygon with 6 equal sides, and in the case that n=2, the main body portion of the second assembly unit is a polygon with 12 sides.

The main body portion of the first assembly unit is connected to multiple connecting portions, and the connecting portions are connected to each equal side of the main body portion respectively. It should be noted that, the equal sides refers to any one of the equal sides of the polygon with 6n equal sides. The connecting portion on each equal side is connected to each of the adjacent first assembly units through a sliding pair, each sliding pair between any two of the first assembly units includes a first slide slot arranged on the connecting portion of one first assembly unit and a sliding fit structure arranged on the connecting portion of another first assembly unit which can be connected to the first slide slot and slide along the first sliding slot, and a sliding direction of the sliding pair is the same as an extension direction of the equal side where the sliding pair is located.

With such an arrangement, all the sides or some sides of the 6n sides of the polygon with 6n equal sides may be connected to another circumjacent assembly unit by the sliding pair. During connecting, the sliding fit structure slides into the first slide slot, and since the sliding direction is the same as the direction of the equal side where the sliding fit structure is located, when sliding pairs, whose extension lines of the sliding direction intersect at one point, have completed sliding connection, the degrees of sliding freedom of the sliding pairs will form mutual constraints. In this way, the sliding pairs will not be disassembled under natural conditions. Moreover, in the case that one of the sliding pairs fails in connection, the integral structural strength will not be affected. The assembly structure provided according to the present application, if a single assembly unit is required to be disassembled after the assembly is completed, special tools are required to drive the associated first assembly units to move by mutual cooperation so that the sliding pairs can be disassembled.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
Figure 1 is a schematic view showing a structure of a first assembly unit according to an embodiment of the present application;
Figure 2 is a schematic view showing an assembly structure according to the embodiment of the present application ;
Figure 3 is a schematic perspective view showing a structure of a first assembly unit according to the embodiment of the present application;
Figure 4 is an enlarged schematic view showing an A portion in the Figure 3;
Figure 5 is a schematic view showing a structure of a first sliding pair according to the embodiment of the present application;
Figure 6 is a schematic view showing a structure of a second sliding pair according to the embodiment of the present application;
Figure 7 is a schematic view showing a structure of a third sliding pair according to the embodiment of the present application;
Figure 8 is a schematic view showing a structure of a fourth sliding pair according to the embodiment of the present application;
Figure 9 to Figure 11 are schematic views showing an outline of a main body portion of a second assembly unit according to the embodiment of the present application;
Figure 12 is a schematic view showing a first assembly unit having a pin mounting structure according to the embodiment of the present application;
Figure 13 is a schematic view showing a folding first assembly unit according to the embodiment of the present application;
Figure 14 is a schematic view showing a first assembly unit having a groove according to the embodiment of the present application;
Figure 15 is a schematic view showing a first assembly unit having a reinforcing rib according to the embodiment of the present application;
Figure 16 is a schematic view showing a first assembly unit in which an included angle between a connecting portion and a main body portion is an obtuse angle according to the embodiment of the present application;
Figure 17 is an schematic view showing an assembly of the first assembly units in which an included angle between a connecting portion and a main body portion is an obtuse angle according to the embodiment of the present application;
Figure 18 is a schematic view showing a first assembly unit in which an included angle between a connecting portion and a main body portion is an acute angle according to the embodiment of the present application;
Figure 19 is an schematic view showing an assembly of the first assembly units in which an included angle between a connecting portion and a main body portion is an acute angle according to the embodiment of the present application.

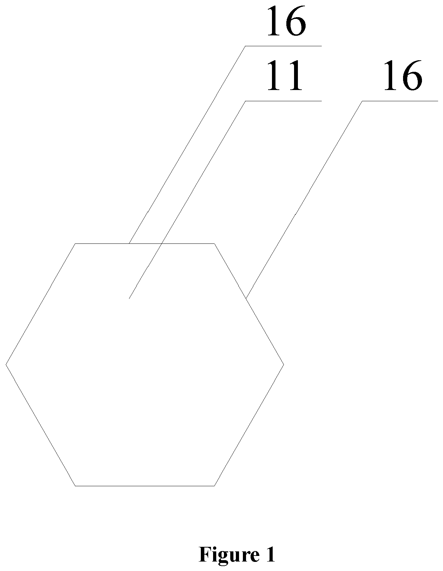

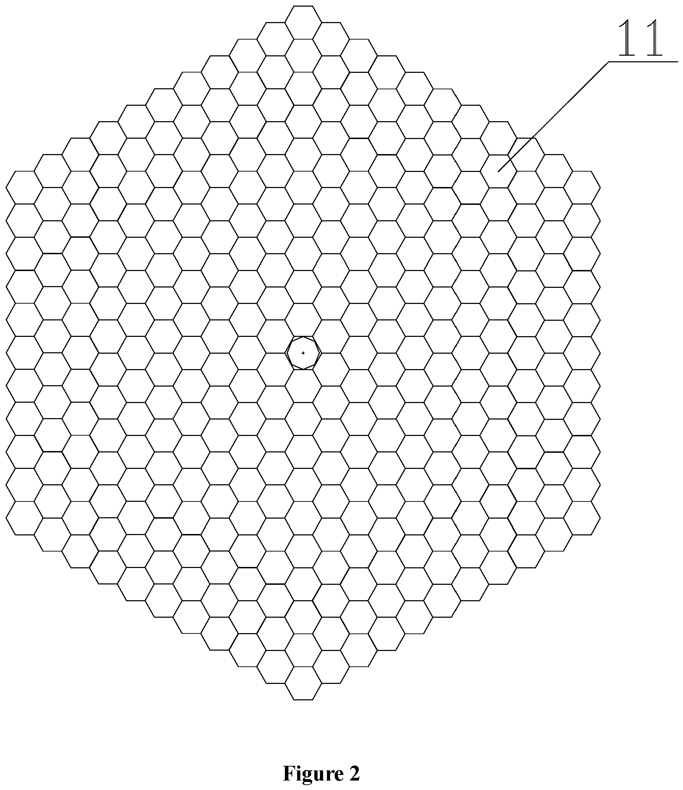

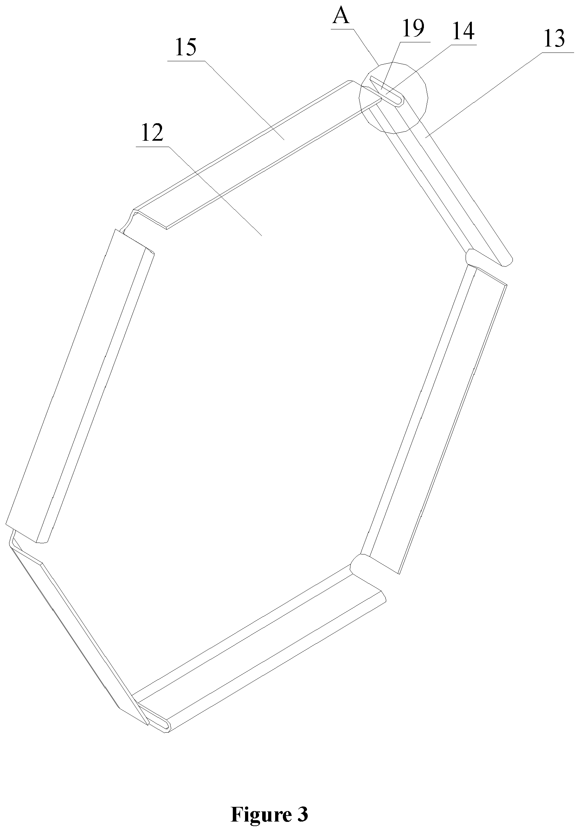

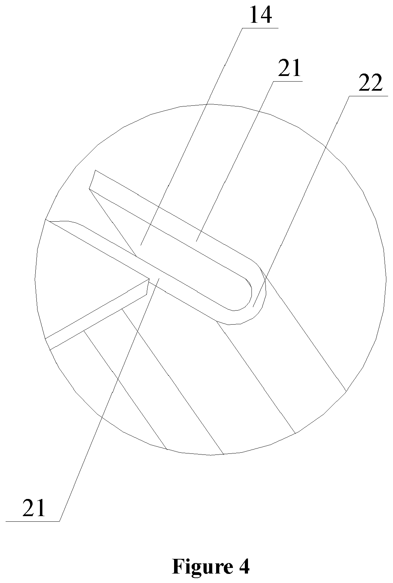

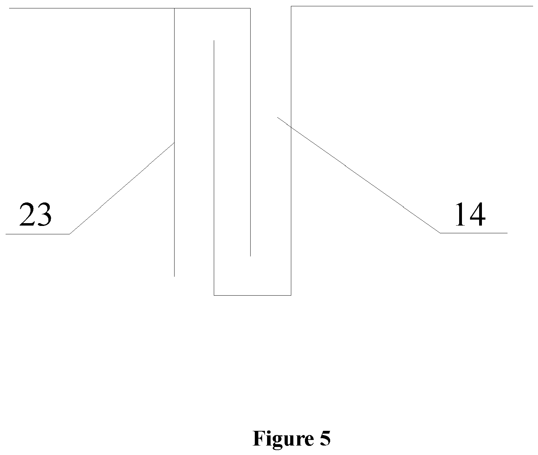

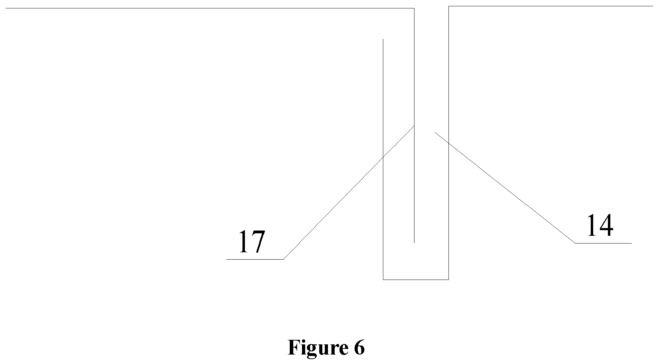

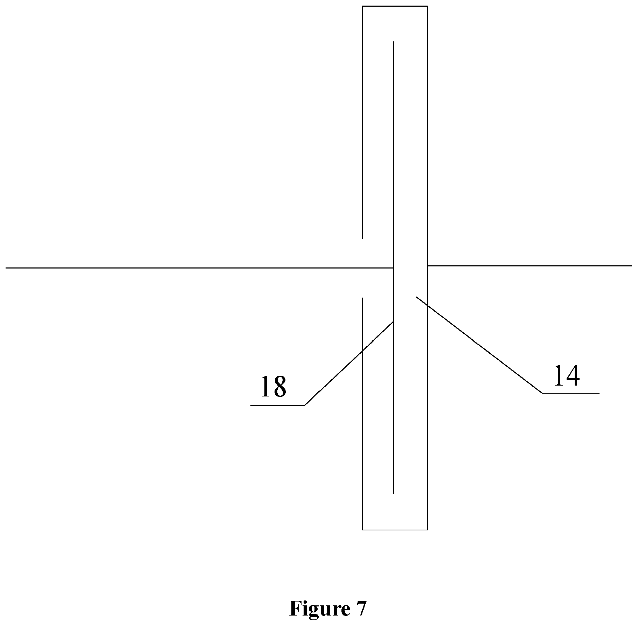

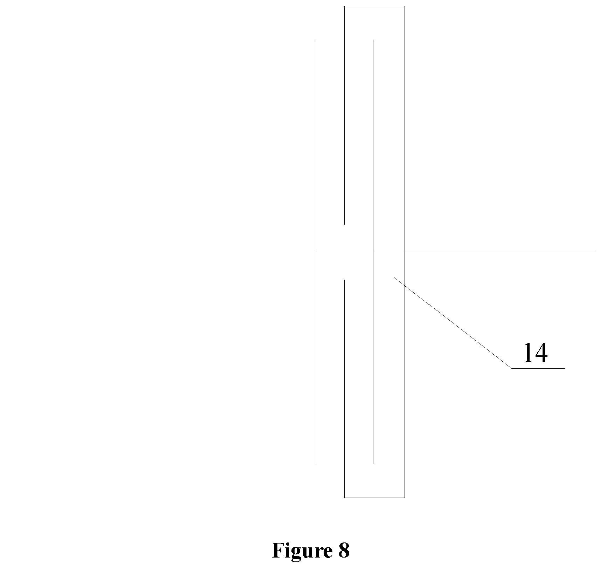

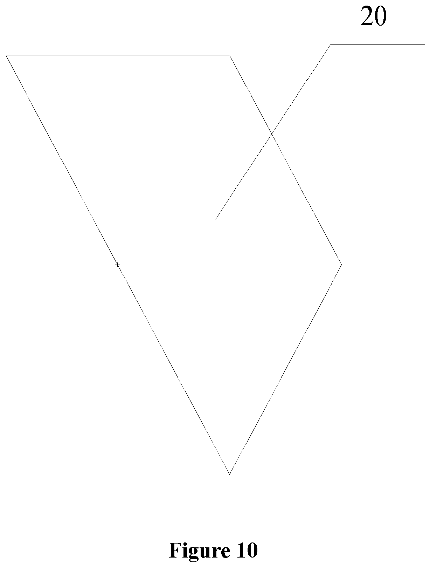

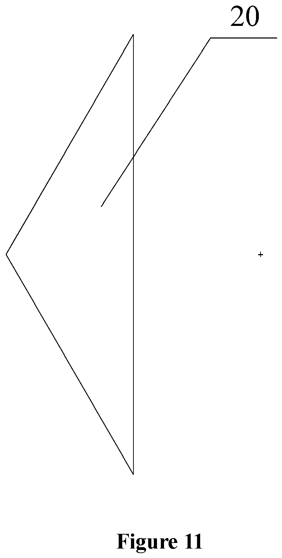

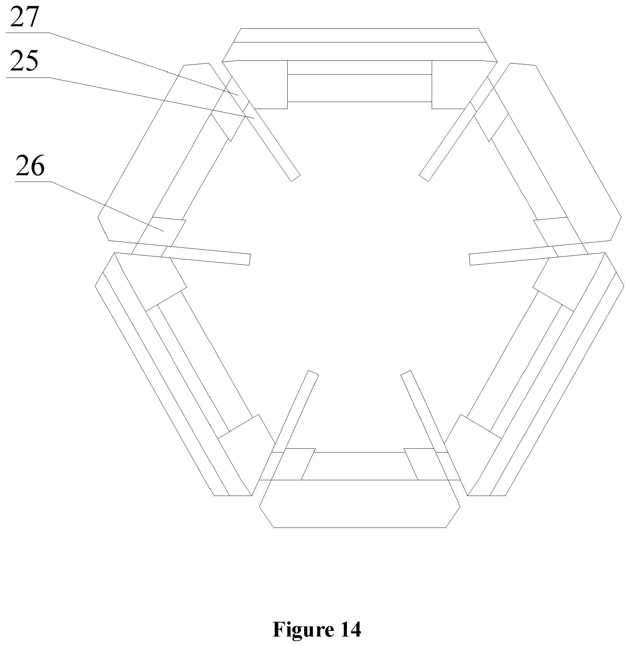

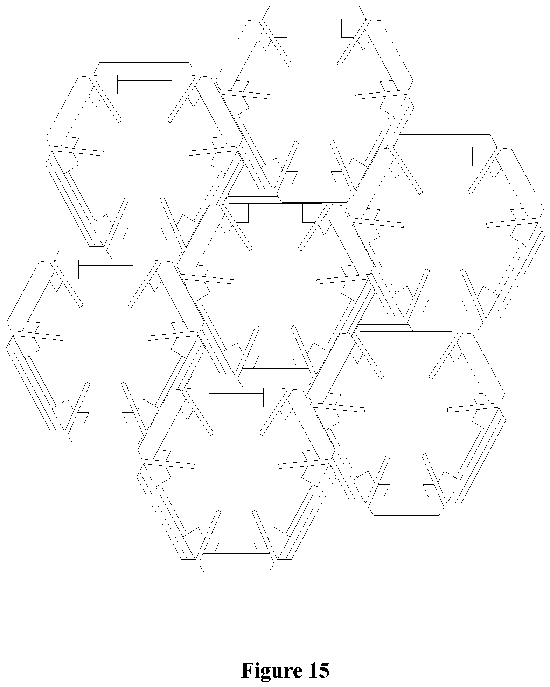

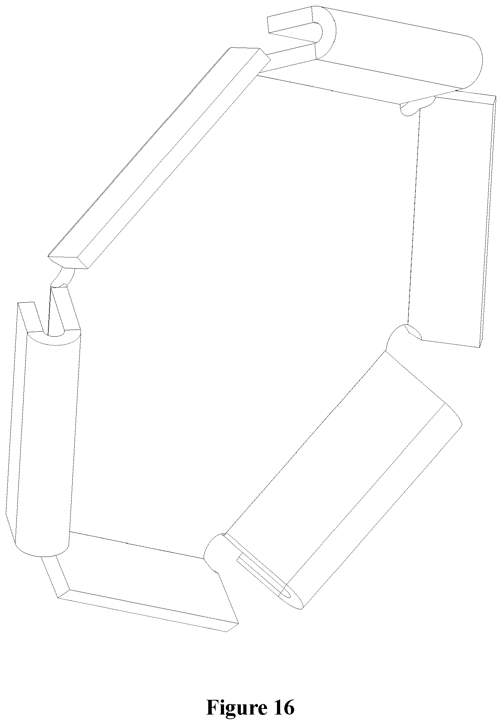

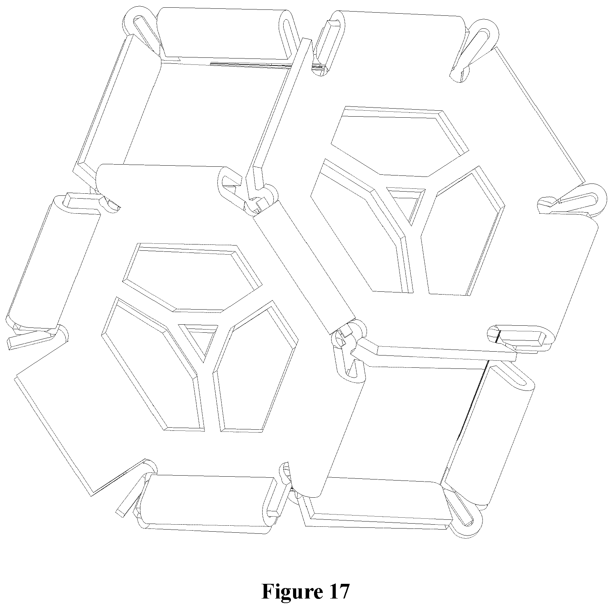

In Figure 1 to Figure 19:

| | | | |
|---|---|---|---|
| 11 | first assembly unit, | 12 | main body portion, |
| 13 | connecting portion, | 14 | first slide slot, |
| 15 | sliding fit structure, | 16 | equal side, |
| 17 | L-shaped sliding buckle, | 18 | T-shaped sliding buckle, |
| 19 | sliding entrance, | 20 | second assembly unit, |
| 21 | slot side wall, | 22 | slot bottom wall, |
| 23 | second slide slot, | 24 | pin mounting structure, |
| 25 | groove, | 26 | buckle, |
| 27 | supporting rib. | | |

### DETAILED DESCRIPTION

An object of the specific embodiment is to provide an assembly structure, whose assembly units can be assembled and disassembled by sliding fit, and the assembly units cannot be disassembled under natural conditions after the assembly is completed, which has high reliability. In addition, after the assembly is completed, a connection failure of a position will not affect the strength of the overall structure. Moreover, such an assembly structure has a simple assembly process, does not need additional connecting pieces, and has a low cost.

The embodiment is illustrated hereinafter with reference to the drawings. In addition, the following embodiment does not limit the invention contents recorded in the claims. Furthermore, the overall content of the following embodiment is not limited to the necessity of solutions recorded in the claims.

Referring to Figure 1 to Figure 19, the assembly structure provided according to the embodiment includes multiple first assembly units 11. The first assembly units may particularly be platy or blocky structure. Each of the first assembly units includes a main body portion 12 and a connecting portion 13.

An outline shape of the main body portion 12 is a polygon with 6n equal sides, wherein "n" is a positive integer. For example, "n" may be one, and in the case that "n" equals to one, the outline shape of the main body portion 12 is a polygon with 6 equal sides; in the case that "n" equals to two, the outline shape of the main body portion 12 is a polygon with 12 equal sides; and in the case that "n" equals to three, the outline shape of the main body portion 12 is a polygon with 18 equal sides.

The outline shape of the main body portion 12 is a polygon with 6n equal sides, however, since the main body portion 12 is connected to a connecting portion, the projected outline of the first assembly unit 11 may not be a polygon with 6n equal sides. Of course, the overall outline of the first assembly unit 11 can be designed to be a polygon with 6n equal sides.

Each equal side 16 of the main body portion 12 is provided with the connecting portion 13, and the connecting portion 13 and the main body portion 12 are of an integral structure. For instance, the connecting portion and the main body portion can be connected into an integral structure by injection molding, sheet metal processing or welding.

The connecting portion 13 on each equal side 16 of the main body portion 12 of the first assembly unit 11 is connected to each adjacent first assembly unit 11 through a sliding pair. The sliding pair between any two first assembly unit 11 includes a first slide slot 14 arranged on the connecting portion 13 of one first assembly unit 11 and a sliding fit structure 15 arranged on the connecting portion 13 of another first assembly unit 11, and the sliding fit structure 15 can be connected to the first slide slot 14 and slide along the first sliding slot 14a. A sliding direction of the sliding pair is the same as an extension direction of the equal side 16 where the sliding pair is located.

According to the embodiment, the first slide slot 14 is provided with two slot side walls 21, and the two slot side walls 21 are arranged face to face with a certain interval, which is a width of the slot. Bottoms of the two slot side walls 21 are connected by a slot bottom wall 22 of the first slide slot 14, so as to form a slot structure having two slot side walls and one slot bottom side.

It should be noted that, any two first assembly units are assembled together by the sliding pair. Specifically, the sliding fit structure 15 slides into the first slide slot 14. An extension direction of the first slide slot 14 is the same as an extension direction of the equal side 16 of the connecting portion 13 where the first slide slot is located. Moreover, for the sliding fit structure 15 into the first slide slot 14 and along the first slide slot 14, the top of the first slide slot 14, that is, the side opposite to the slot bottom wall 22 is an open structure. An extension length of the first slide slot 14 may be the same as or shorter than an extension length of the equal side 16 where the first slide slot is located.

With such an arrangement, all the sides or some sides of the 6n sides of the polygon with 6n equal sides may be connected to another circumjacent assembly unit by the sliding pair. During connecting, the sliding fit structure slides into the first slide slot, and since the sliding direction is the same as the direction of the equal side where the sliding fit structure is located, the degree of sliding freedom of the sliding pairs will form mutual constraints after the sliding pairs, whose extension lines of the sliding direction intersect at one point, are connected.

For instance, when adjacent three sliding pairs have connected, the sliding directions of the three sliding pairs intersect at one point, and the sliding of one of the three sliding pairs will be constrained by the other two sliding pairs, so that the three sliding pairs will not slide under constraints.

In this way, each sliding pair will be subjected to the constraints from the other two slide pairs after the assembly is completed, so the sliding pairs will not be disassembled under natural conditions. Moreover, in the case that one of the slide pairs is disabled in connection, the other two slide pairs remain in the mutual constraints. The breakage of a part of the first assembly unit will not affect the integral constraints among the sliding pairs, therefore, the integral structural strength will not be affected.

According to a preferable solution of the embodiment, one connecting portion in any two adjacent connecting portions 13 of the same first assembly unit 11 is provided with the first sliding slot 14, and the other connecting portion is provided with the sliding fit structure 15.

It should be noted that, the two adjacent connecting portions 13 refer to the connecting portions 13 arranged on two adjacent equal sides 16 of the main body portion 12 of one first assembly unit. Therefore, any two first assembly units can be connected together, moreover, in the case that many first assembly units are assembled, any of the first assembly units can be chosen for connection.

In addition, it should be noted that, mutual constraints of the sliding pairs in the sliding direction limit the degrees of freedom of a co-plane where the sliding pairs are located.

In order to realize mutual constraints of the degrees of vertical freedom in a plane vertical to the co-plane (referred to as the degrees of vertical freedom hereinafter) of the sliding pairs, the sliding fit structure 15 is preferably a second slide slot 23. A slot opening of the first slide slot 14 and a slot opening of the second slide slot 23 are opposite, and the first slide slot 14 and the second slide slot 23 can engage with each other, that is, the slot side walls of the first slide slot 14 and the second slide slot 23 enter into the slots respectively. Moreover, the slot opening of the first slide slot 14 and the slot opening of the second slide slot 23 are opposite.

When the assembly of the sliding pairs on adjacent equal sides 16 is completed, since the slot openings of the first slide slot 14 and the second slide slot 23 which are located on two adjacent equal sides of the same assembly unit are opposite. Specifically, a first slide slot 14 of the assembly unit fits with a second slide slot 23 of another assembly unit to form a sliding pair, and a second slide slot 23 of the assembly unit fits with a first slide slot 14 of another assembly unit to form another sliding pair. The degrees of the vertical freedom of the two sliding pairs are opposite to each other, so that the degrees of the vertical freedom can constrain each other, and a stable assembly is realized in the vertical direction. In this way, when the assembly is completed, mutual constraints between the two sliding pairs are formed to prevent the first slide slot 14 and the second slide slot 23 of one sliding pair from departing from each other.

An extension direction of the first sliding slot 14 and an extension direction of the second sliding slot 23 are the same as an extension direction of the equal side 16 where the first sliding slot and the second sliding slot are located, and extension lengths of the first sliding slot 14 and the second sliding slot 23 are preferably equal to or shorter than an extension length of the equal side 16 where the first sliding slot and the second sliding slot are located. In this way, a certain interval is present between two adjacent slide slots of the same assembly unit, which forms a sliding entrance 19. In order to facilitate the assembly, both ends of the extension directions of the first sliding slot 14 and the second sliding slot 23 are provided with the sliding entrance 19.

In addition, for improving the assembly stability, a thickness of the side wall entering into the second slide slot 23 of the first slide slot 14 is equal to a width of the second slide slot 23, and a thickness of the side wall entering into the first slide slot 14 of the second slide slot 23 is equal to a width of the first slide slot 14. With such an arrangement, when the first slide slot 14 fits with the second slide slot 23, a fit clearance between the first slide slot 14 and the second slide slot 23 is relatively small on a basis that the two slide slots can slide relatively, thus enhancing the stability of the connection.

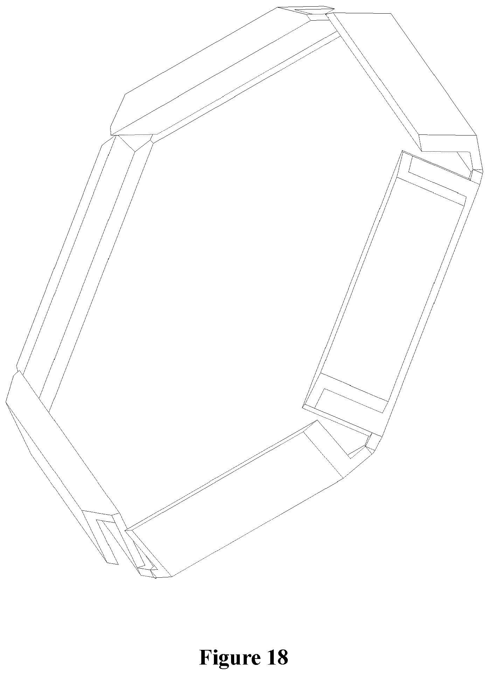

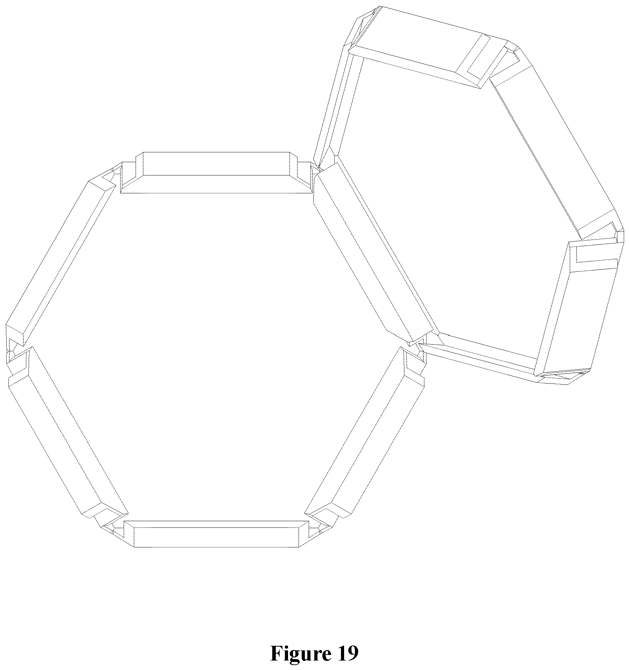

An included angle between the first slide slot 14, the second slide slot 23 and a plane where the main body portion is located may be 90 degrees, that is, an depth direction of the first slide slot 14 and an depth direction of the second slide slot 23 are vertical to the plane where the main body portion is located, so that after each main body is connected by the connecting portion, each main body lies in the same plane. Of course, in other embodiments, the included angle between the first slide slot 14, the second slide slot 23 and the plane where the main body portion is located may be acute angle or obtuse angle. Thus, when the connecting portion 13 of each assembly unit 11 is connected together, each main body portion may lie in different planes. Referring to Figure 16, Figure 17, Figure 18 and Figure 19, Figure 16 and Figure 17 are schematic views showing a single body and an assembly of the first assembly unit in which an included angle between a connecting portion and a main body portion is an obtuse angle, Figure 18 and Figure 19 are schematic views showing a single body and an assembly of the first assembly unit in which an included angle between a connecting portion and a main body portion is an acute angle.

According to another embodiment of the present application, on a basis that the connecting portions on the equal sides of the first assembly unit are connected to other first assembly units by the sliding pairs, the connecting portions may also be connected to each adjacent first assembly unit through a pin assembly structure. The pin assembly structure between any two first assembly units includes a first pin hole which is arranged on the connecting portion of one first assembly unit, a second pin hole which is arranged on the connecting portion of another first assembly unit and can align with the first pin hole, and a pin shaft which can be inserted in the first pin hole and the second pin hole. An extension direction of the first pin hole and an extension direction of the second pin hole are the same as an extension direction of the equal side where the pin hole is located.

With such an arrangement, two first assembly units can be assembled together by a pin shaft inserted in a first pin hole and a second pin hole.

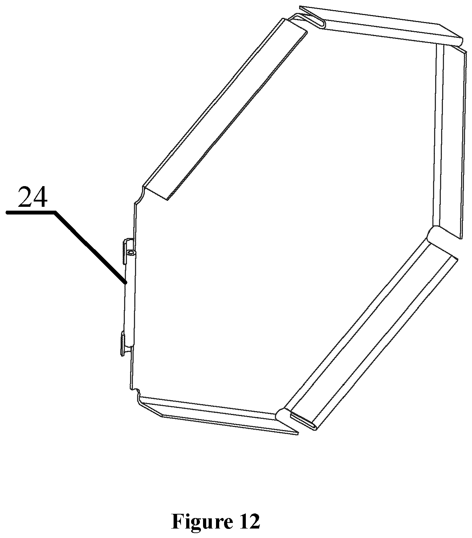

For instance, the pin mounting structure may be arranged on one side of the first assembly unit, and the sliding pairs are arranged on the other five sides, as shown in Figure 12.

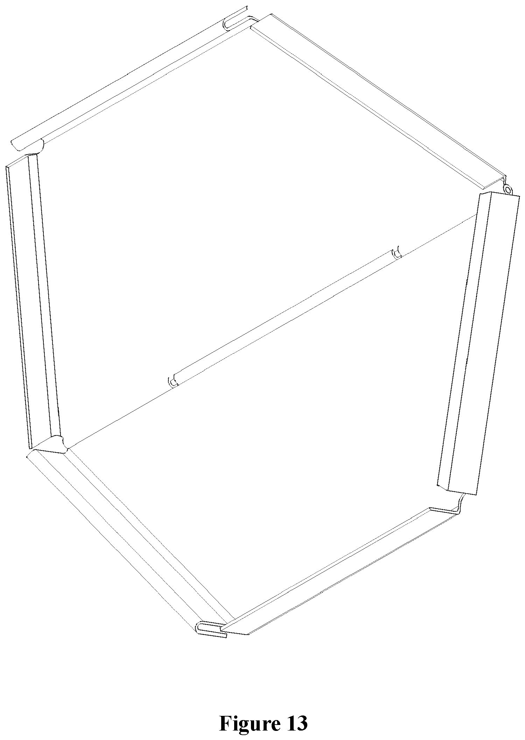

Moreover, it should be noted that, in the embodiment, the main body portion of the first assembly unit may be of a folding design. For instance, the main body of the first assembly unit includes two parts connected by the pin shaft, as shown in Figure 13.

In the embodiment, the first slide slot 14 and the second slide slot 23 are slots arranged on an upper plate surface and an lower plate surface. In this way, when each first assembly unit 11 is assembled together, an integral plate structure with a relatively large area can be formed, which can be applied in various fields.

Of course, in other embodiments, the connecting portion 13 may protrude out of the main body 12 or lower than the main body 12. When the connecting portion 13 protrudes out of the main body 12, a depth of the first slide slot 14 and a depth of the second slide slot 23 may be larger than a thickness of the main body part 12, which leads to a larger fitting area, thereby enhancing the fitting reliability.

In other embodiments, the specific arrangement of the first slide slot 14 and the sliding fit structure 15 may be other types. Several types are listed and illustrated hereinafter.

For instance, the sliding fit structure 15 may be an L-shaped sliding buckle which may enter into the first sliding slot 14, and a side wall of the L-shaped sliding buckle 17 enters into the first sliding slot 14.

For instance, a width of a slot opening of the first slide slot 14 may be smaller than a width between two slot side walls. The sliding fit structure 15 is a T-shaped sliding buckle 18 which may enter into the first sliding slot 14.

It should be noted that, the assembly structure formed by assembling multiple first assembly units 11 has a simplex contour, a poor appearance effect and a simplex shape. For perfecting the shape of the assembly structure according to the embodiment, the assembly structure provided by the embodiment further includes a second assembly unit 20, and the second assembly unit 20 includes a main body portion and a connecting portion.

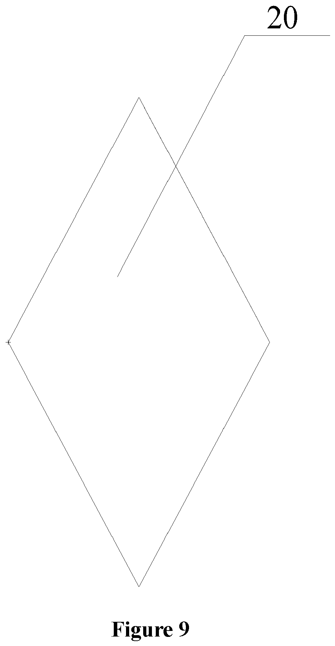

Furthermore, an outline shape of the main body portion 12 of the second assembly unit is a polygon, for instance, a triangle, a trapezoid or a rhombus shown in Figure 9 to Figure 11 and the like. It should be noted that, each side of the outline of the polygon of the main body 12 of the first assembly unit may not only be a straight side, but also be a side extending along a curved line. An extension direction of the connecting portion may be same with a shape of a side of the main body portion or not, the specific shape may be determined according to the actual situations.

The connecting portions of the second assembly unit 20 are arranged on the sides of the main body portions of the second assembly unit 20, and the connecting portions are connected to the main body portions to form an integral structure. The connecting portions of the second assembly unit 20 can connect to the connecting portion 13 of the first assembly unit 11.

In this way, the second assembly unit 20 is additionally provided onto the assembly structure, which may change an overall shape of an outer edge of the assembly structure, and perfect the appearance design of the assembly structure.

Similarly, the connecting portions of the second assembly unit 20 are similar to the connecting portion 13 of the first assembly unit 11, which may also be a sliding fit structure fitting with the first slide slot 14 of the first assembly unit 11, or a slide slot fitting with the sliding fit structure 15 of the first assembly unit 11. The details may be referred to hereinbefore, which will not be repeated here. Each second assembly unit 20 may also be connected to each other.

In addition, in the present embodiment, in order to facilitate the disassembly of each first assembly unit, a groove 25 is arranged between the connecting portion and the main body portion, so that an elastic deformation of the connecting portion may generate. The assembly structure further includes a supporting rib 27 which is detachably connected to the assembly unit, the elastic deformation of the connecting portion can be avoided when the supporting rib 27 is supported in a slot. In this way, when the first assembling unit is required to be connected, the elastic deformation of the connecting portion may generate so as to connect the connecting portion. After the connection, the supporting rib 27 is assembled onto the first assembly unit for preventing a connection failure caused by the elastic deformation of the connecting portion.

Further, in order to prevent the supporting rib from falling off and to facilitate the assembling of the supporting ribs, the first assembly unit is provided with a buckle 26 for clamping the supporting rib 27.

Based on the above description of the disclosed embodiments, the person skilled in the art is capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. An assembly structure, comprising:
a plurality of first assembly units,
wherein each of the plurality of first assembly units includes a main body portion and a connecting portion, an outline shape of the main body portion is a polygon with 6n equal sides,
wherein "n" is a positive integer, the connecting portion is arranged on each equal side of the main body portion and is connected to the main body portion to form an integral structure, the connecting portion of each equal side is connected to each of adjacent first assembly units through a sliding pair,
wherein the sliding pair between any two of the first assembly units includes a first slide slot arranged on the connecting portion of one of the two first assembly units and a sliding fit structure arranged on the connecting portion of the other first assembly unit, and a sliding direction of the sliding pair is the same as an extension direction of the equal side where the sliding pair is located, wherein the sliding fit structure is connected to the first slide slot and slidable along the first sliding slot.

2. The assembly structure according to claim 1, wherein, one connecting portion in any two adjacent connecting portions of the same first assembly unit is provided with the first sliding slot, and the other connecting portion is provided with the sliding fit structure.

3. The assembly structure according to claim 2, wherein, the sliding fit structure is a second sliding slot, a slot opening of the first slide slot and a slot opening of the second slide slot are opposite, and the first slide slot and the second slide slot engage with each other.

4. The assembly structure according to claim 3, wherein, a thickness of a side wall entering into the second slide slot of the first slide slot is equal to or smaller than a width of the second sliding slot, and a thickness of a side wall entering into the first slide slot of the second slide slot is equal to or smaller than a width of the first sliding slot.

5. The assembly structure according to claim 3, wherein, one end and/or both ends of the first slide slot and the second slide slot in a sliding direction are provided with a sliding entrance structure.

6. The assembly structure according to claim 1, wherein, the sliding fit structure is an L-shaped sliding buckle which enters into the first sliding slot, and a side wall of the L-shaped sliding buckle enters into the first sliding slot.

7. The assembly structure according to claim 1, wherein, a width of the slot opening of the first slide slot is smaller than a width between the side walls of the first sliding slot, and the sliding fit structure is a T-shaped sliding buckle which enters into the first sliding slot.

8. The assembly structure according to claim 1, wherein, an included angle between the connecting portion and the main body portion of the first assembly unit is 90 degrees or not.

9. The assembly structure according to claim 1, further comprising a second assembly unit, wherein the second assembly unit comprises a main body portion and a connecting portion, an outline shape of the main body portion of the second assembly unit is a polygon, the connecting portion of the second assembly unit is arranged on a side of the second assembly unit and is connected to the main body portion to form an integral structure; the connecting portion of the second assembly unit is connected to the connecting portion of the first assembly unit, and the connecting portions of two second assembly units are connected to each other.

10. The assembly structure according to claim 8, wherein, the connecting portion of the second assembly unit is a sliding fit structure which fits with the first slide slot of the first assembly unit, or a slide slot fitting with the sliding fit structure of the first assembly unit.

11. The assembly structure according to claim 9, wherein, an included angle between the connecting portion and the main body portion of the second assembly unit is 90 degrees or not.

12. The assembly structure according to claim 1, wherein, the connecting portion on the equal side is also connected to each of the adjacent first assembly units through a pin mounting structure, the pin mounting structure between any two of the first assembly units comprises a first pin hole which is arranged on the connecting portion of one first assembly unit, a second pin hole which is arranged on the connecting portion of another first assembly unit and aligns with the first pin hole, and a pin shaft which is inserted in the first pin hole and the second pin hole, and an extension direction of the first pin hole and an extension direction of the second pin hole are the same as an extension direction of the equal side where the pin holes are located.

13. The assembly structure according to claim 1, wherein, a groove is arranged between the connecting portion and the main body portion to allow an elastic deformation of the connecting portion to generate, the assembly structure further comprises a supporting rib which is detachably connected to the assembly unit, and, the elastic deformation of the connecting portion is avoided when the supporting rib is supporting the assembly unit.

14. The assembly structure according to claim 12, wherein, the first assembly unit is provided with a buckle for mounting the supporting rib.

15. The assembly structure according to claim 8, wherein, the connecting portion on a side the second assembly unit is also connected to each of adjacent first assembly units or second assembly unit through a pin mounting structure, and each pin mounting structure comprises a first pin hole which is arranged on one connecting portion, a second pin hole which is arranged on another connecting portion and aligns with the first pin hole, and a pin shaft which is inserted in the first pin hole and the second pin hole, and an extension direction of the first pin hole and an extension direction of the second pin hole are the same as an extension direction of the equal side where the pin holes are located.
